# EUROPEAN PATENT APPLICATION

(11) **EP 4 459 054 A1**
(43) Date of publication of application: **06.11.2024**
(21) Application number: 24172057.2
(22) Date of filing: 24.04.2024
(51) Int. Cl.: E02F 9/26, F16C 17/24

(54) **IMPROVED HINGE FOR A WORK VEHICLE**

(30) Priority: 04.05.2023 IT 202300008859
(71) Applicant: CNH Industrial Italia S.p.A., 10156 Torino (IT)
(72) Inventor: BELLINO, Marilena, 10156 Turin (IT); MARTUCCI, Vito, 10156 Turin (IT)
(74) Representative: CNH Industrial IP Department

(57) **Abstract**

Hinge for a work vehicle (1), the hinge (11) comprising a pin (21) defining an axis (A), a housing (22) configured to house the pin (21), and a bushing (23) radially interposed between the pin (21) and the housing (22), wherein the hinge (11) is provided with sensor means (41) configured to detect wear of the bushing (23).

## Description

### TECHNICAL FIELD

The present invention concerns a hinge for a work vehicle, in particular a hinge for an implement of a work vehicle.

The present invention finds its preferred, although not exclusive, application in a hinge of a heavy vehicle, such as an excavator or a loader. Reference will be made to this application by way of example below.

### BACKGROUND OF THE INVENTION

As is known, a work vehicle, such as an excavator or a loader, comprises a plurality of hinges, each of which allows relative rotation between two elements of the work vehicle.

For example, the work vehicle may comprise a frame and a front implement connected thereto, wherein the implement comprises a first arm hinged to the frame, a second arm hinged to the first arm, a third arm hinged to the second arm, and a bucket hinged to the third arm.

In use, the hinges are subject to wear. When a hinge wears out, there is a problem which does not only concern such hinge. Indeed, many components of the work vehicle are also damaged. This can also lead to safety issues, which increase over time if no action is taken. Fixing the problem caused by the hinge is often more costly than replacing the worn component.

Therefore, the need is felt to improve known hinges, work vehicles and methods so as to intervene quickly and increase safety.

An aim of the present invention is to satisfy the above-mentioned need in a cost-effective and optimised manner.

### SUMMARY OF THE INVENTION

The aforementioned aim is reached by a hinge for a work vehicle, a work vehicle and a method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- figures 1 and 2 are side views of respective work vehicles comprising a plurality of hinges according to the invention;
- figure 3 is a perspective view of the hinge of figures 1 and 2; and
- figure 4 is a front view of the hinge of figure 3.

### DETAILED DESCRIPTION OF THE INVENTION

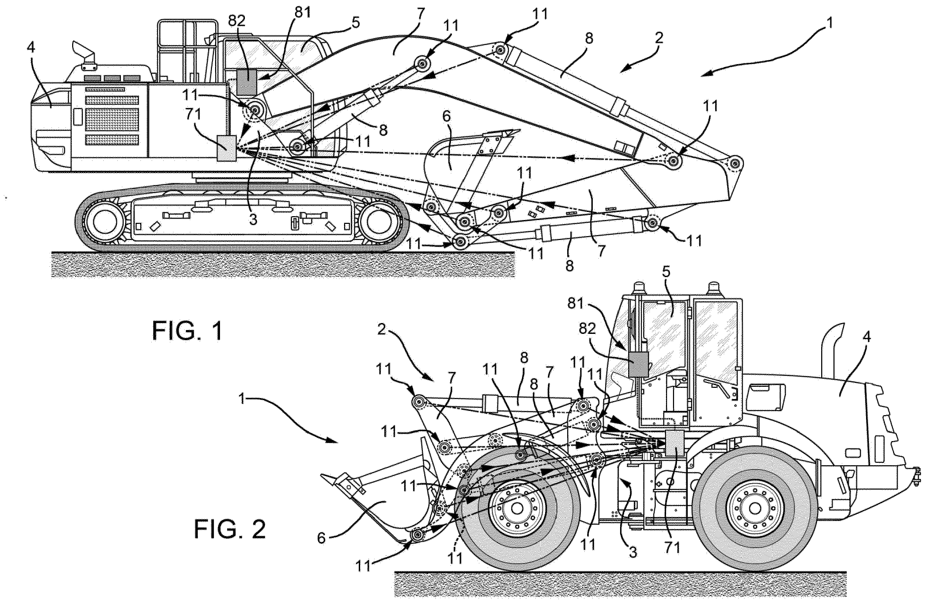

Figures 1 and 2 illustrate respective work vehicles 1 comprising respective implements 2. In particular, the vehicles 1 are heavy vehicles, respectively an excavator (figure 1) and a loader (figure 2).

The vehicle 1 (i.e. each of the excavator and the loader) is of known type and comprises a front portion 3, a rear portion 4, and a cab 5 for a user of the vehicle 1. The implement 2 comprises a bucket 6, a plurality of arms 7 configured to connect the bucket 6 to the front portion 3 of the vehicle 1, and a plurality of cylinders 8 configured to move the arms 7 and thus the implement 2.

The vehicle 1, in particular the implement 2, comprises a plurality of hinges 11 described in detail hereinafter.

Each hinge 11 is configured to connect two elements of the vehicle 11 so as to allow relative rotation therebetween.

Such two elements are e.g. the front portion 3 and the arm 7 hinged thereto, two consecutive arms 7, the arm 7 and the bucket 6 hinged thereto, the arm 7 and an end of the cylinder 8 hinged thereto.

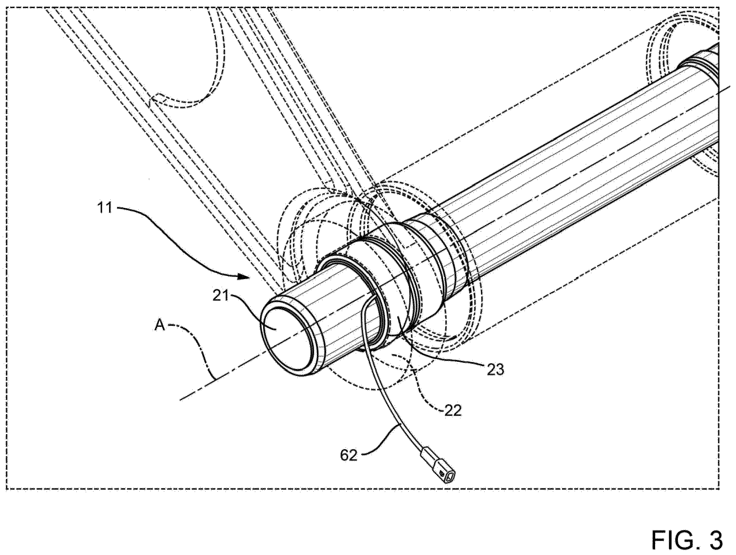

The hinge 11 (i.e. any of the aforementioned hinges 11) comprises (figure 3) a pin 21 defining an axis A, a housing 22 configured to house the pin 21, and a bushing 23 radially interposed between the pin 21 and the housing 22.

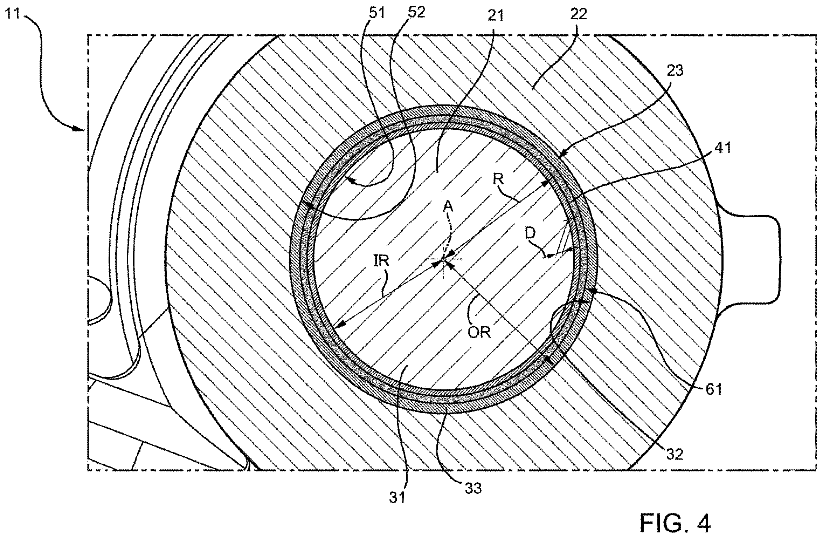

In particular (figure 4), the pin 21 comprises a cylindrical element 31 of axis A, the housing 22 defines a cylindrical seat 32 of axis A wherein the cylindrical element 31 is housed, and the bushing 23 comprises a tubular element 33 of axis A which is housed in the cylindrical seat 32. The tubular element 33 is located radially inside the cylindrical seat 32 and radially outside the cylindrical element 31.

Conveniently, the pin 21 is rotatable with respect to the housing 22, in particular the cylindrical element 31 is rotatable with respect to the cylindrical seat 32.

The hinge 11 is provided with sensor means 41 configured to detect wear of the bushing 23.

In particular, the sensor means 41 are associated with the pin 21, the housing 22 or the bushing 23.

Conveniently, the sensor means 41 detect wear of the bushing 23 by exploiting the interaction between the bushing 23 and the pin 21 and/or the bushing 23 and the housing 22.

Preferably, the sensor means 41 are integrated in the bushing 23.

According to the illustrated embodiment, the bushing 23 comprises an inner radial surface 51 and an outer radial surface 52. Conveniently, the inner radial surface 51 is a cylindrical surface with an inner radius IR, and the outer radial surface 52 is a cylindrical surface with an outer radius OR, wherein the outer radius OR is greater than the inner radius IR. The sensor means 41 are interposed between the inner radial surface 51 and the outer radial surface 52. The sensor means 41 may be closer to the inner radial surface 51 (as in the illustrated embodiment) or the outer radial surface 52, or they may be equidistant therefrom.

Preferably, the sensor means 41 are arranged at a predetermined distance D with respect to the inner radial surface 51 of the bushing 23.

Conveniently, the predetermined distance D is less than the difference between the outer radius OR of the bushing 23 and the inner radius IR of the bushing 23.

In particular, the sensor means 41 have an annular structure, e.g. as a sleeve, of axis A with a minimum radius R and the predetermined distance D is the difference between such radius R and the inner radius IR of the bushing 23, i.e. D = R - IR.

Conveniently, the predetermined distance D is associated with a wear threshold of the bushing 23.

In particular, the predetermined distance D is defined via experimental data, which are obtained from several experiments, performed using known hinges 11, wherein a wear threshold of the bushing 23 is reached and the corresponding distance D is recorded. Conveniently, the wear threshold is less than or equal to a maximum acceptable wear threshold of the bushing 23.

According to another embodiment (not illustrated), the sensor means 41 are housed in a portion of the bushing 23.

In particular:
- the bushing 23, in particular the inner radial surface 51, may define a cavity which faces the pin 21 and wherein the sensor means 41 are housed; and/or
- the bushing 23, in particular the outer radial surface 52, may define a cavity which faces the housing 22 and wherein the sensor means 41 are housed.

Irrespective of the relative position between the sensor means 41 and the bushing 23, the sensor means 41 comprise a mechanical sensor and/or an electrical sensor 61.

Preferably, the mechanical sensor is configured to change its structure upon wear of the bushing 23.

In particular, the mechanical sensor changes its shape due to wear of the bushing 23. For example, the mechanical sensor is arranged at a predetermined depth with respect to the bushing 23 and comprises an insert, e.g. metallic or plastic and preferably of a bright colour, which protrudes axially outside the bushing 23. Since wear of the bushing 23 is reflected in a structural change of the mechanical sensor, and thus of the insert, the mechanical sensor allows wear of the bushing 23 to be visually detected.

The electrical sensor 61 is configured to detect wear of the bushing 23 and produce a wear signal indicative thereof.

In particular, the wear signal depends on the interaction between the bushing 23 and the pin 21 and/or the bushing 23 and the housing 22. Conveniently, the wear signal is a discrete signal.

According to the illustrated embodiment, the electrical sensor 61 is configured to transmit the wear signal upon contact with the pin 21.

In particular, the wear signal depends on the interaction between the bushing 23 and the pin 21, in particular on the contact therebetween.

Preferably, the electrical sensor 61 is switchable between a first configuration, wherein the electrical sensor 61 is not in contact with the pin 21, and a second configuration, wherein the electrical sensor 61 is in contact with the pin 21. The wear signal is indicative of the configuration of the electrical sensor 61.

In particular, the wear signal provides information on whether the electrical sensor 61 is not in contact with the pin 21, i.e. it is in the first configuration, or is in contact with the pin 21, i.e. it is in the second configuration.

In other words, the electrical sensor 61 acts as a switch which can be in one out of two configurations, i.e. the first configuration and the second configuration. The wear signal is indicative of which of the two configurations is the current one. Therefore, the wear signal is a binary signal.

Conveniently, the electrical sensor 61 is configured to transmit the wear signal upon switching from the first configuration to the second configuration.

In particular, the pin 21 and the electrical sensor 61 are electrically conductive, whereas the bushing 23 is not. The first configuration, wherein the electrical sensor 61 is not in contact with the pin 21, corresponds to an open circuit and the second configuration, wherein the electrical sensor 61 is in contact with the pin 21, corresponds to a closed circuit. Upon switching from the first configuration, i.e. the open circuit, to the second configuration, i.e. the closed circuit, the electrical sensor 61 transmits the wear signal.

Conveniently (figure 3), the electrical sensor 61 transmits the wear signal via a wire 62 or wirelessly.

Preferably, the vehicle 1 (figures 1 and 2) comprises an electronic control unit 71 configured to receive the wear signal from the electrical sensor 61 and to transmit a warning signal on the basis of the wear signal.

In particular, the electrical sensor 61 is configured to transmit the wear signal to the electronic control unit 71, which in turn is configured to transmit the warning signal in response to the wear signal.

Conveniently, the electronic control unit 71 is configured to transmit the warning signal to an electronic device 81 communicatively coupled to the electronic control unit 71.

In particular, the warning signal transmitted by the electronic control unit 71 is received by the electronic device 81 which can be internal to, i.e part of, the vehicle 1 or external, i.e. not part of, the vehicle 1. The electronic device 81 is configured to provide visual and/or acoustic information relating to the warning signal so as to warn e.g. the user of the vehicle 1.

For example, the electronic device 81 is a smartphone or a tablet wirelessly coupled to the electronic control unit 71 and provided with an application which provides visual and acoustic notifications to the user of the smartphone or the tablet. The smartphone or the tablet is an example of electronic device 81 which is external to, i.e. not part of, the vehicle 1 and configured to provide visual and acoustic information relating to the warning signal.

Preferably, the vehicle 1 comprises a display device 82 communicatively coupled to the electronic control unit 71. The display device 82 is configured to receive the warning signal and to display visual information on the basis of the warning signal.

In particular, the display device 82 is located inside the cab 5 and is coupled to the electronic control unit 71 via wires or wirelessly. The display device 82 is an example of electronic device 81 which is internal to, i.e. part of, the vehicle 1 and configured to provide visual information relating to the warning signal. The visual information provided by the display device 82 allows the user of the vehicle 1 to be warned.

Conveniently, the work vehicle 1 comprises a plurality of electrical sensors 61 associated with the respective hinges 11, i.e. each hinge 61 comprises the respective electrical sensor 61. The electronic control unit 71 is configured to receive a plurality of wear signals from the respective electrical sensors 61, wherein each wear signal is associated with the respective hinge 11, and to transmit a plurality of warning signals to at least one electronic device 81, wherein each warning signal is associated with the respective wear signal.

In particular, each electrical sensor 61 is configured to transmit the respective wear signal to the electronic control unit 71. Each wear signal is associated with the respective hinge 11, i.e. the hinge 11 comprising the respective electrical sensor 61 transmitting such wear signal, and is distinguishable from all the other wear signals, i.e. the wear signals transmitted by the other electrical sensors 61 and associated with the respective hinges 11. The electronic control unit 71 is configured to transmit the respective warning signal, i.e. the warning signal associated with the respective wear signal which in turn is associated with the respective hinge 11, to one or more electronic devices 81, e.g. the display device 82 and/or one or more smartphones or tablets.

Therefore, each warning signal is ultimately associated with the respective hinge 11.

The present invention also relates to a method for warning of wear in the vehicle 1.

The method comprises the steps of:
- receiving, by the electronic control unit 71, a wear signal from the electrical sensor 61, the wear signal being associated with the respective hinge 11; and
- transmitting, by the electronic control unit 71, a warning signal on the basis of the wear signal.

Conveniently, visual and/or acoustic information relating to the warning signal allows e.g. the user of the vehicle 1 to be warned.

Since each warning signal is associated with the respective wear signal which in turn is associated with the respective hinge 11, the user is warned of the specific hinge 11 which is subject to wear.

The operation of the embodiment of the invention as described above is the following.

In use, the hinge 11 is subject to wear. In particular, the bushing 23 wears out and its radial dimension decreases over time. This is due to the interaction between the bushing 23 and the pin 21, in particular the sliding therebetween. When wear of the bushing 23 is such that its inner radial dimension decreases of a length equal to the predetermined distance D, the electrical sensor 61 gets in contact with the pin 21 and transmits the respective wear signal to the electronic control unit 71 which receives the wear signal and transmits the respective warning signal to the electronic device 81, e.g. the display device 82 which receives the warning signal and displays visual information on the basis of the warning signal. Therefore, the user of the vehicle 1 is warned of wear of the specific hinge 11 and can take immediate action.

In view of the foregoing, the advantages of the vehicle 1 and the hinge 11 according to the invention are apparent.

The sensor means 41 of the hinge 11 allow to intervene quickly and increase safety, thus avoiding damages to many components of the vehicle 1 and safety issues which would otherwise increase over time.

Indeed, the sensor means 41 allow to easily identify the worn hinge 11, whose worn bushing 23 can be replaced.

Furthermore, the vehicle 1 comprising a plurality of hinges 11 and a plurality of electrical sensors 61, associated with the respective hinges 11, allows to directly identify the specific hinge 11 whose worn bushing 23 needs to be replaced.

It is clear that modifications can be made to the described vehicle 1 and hinge 11 which do not extend beyond the scope of protection defined by the claims.

For example, the shape of the components may be different from that described.

Furthermore, the sensor means 41 may be configured to detect wear of the bushing 23 due to the interaction between the bushing 23 and the housing 22.

## Claims

1. Hinge for a work vehicle (1), the hinge (11) comprising a pin (21) defining an axis (A), a housing (22) configured to house the pin (21), and a bushing (23) radially interposed between the pin (21) and the housing (22),
wherein the hinge (11) is provided with sensor means (41) configured to detect wear of the bushing (23).

2. Hinge as claimed in claim 1, wherein the sensor means (41) are integrated in the bushing (23).

3. Hinge as claimed in claim 2, wherein the bushing (23) comprises an inner radial surface (51) and an outer radial surface (52), the sensor means (41) being interposed between the inner radial surface (51) and the outer radial surface (52) .

4. Hinge as claimed in claim 3, wherein the sensor means (41) are arranged at a predetermined distance (D) with respect to the inner radial surface (51) of the bushing (23).

5. Hinge as claimed in claim 4, wherein said predetermined distance (D) is associated with a wear threshold of the bushing (23) .

6. Hinge as claimed in claim 2, wherein the sensor means (41) are housed in a portion of the bushing (23).

7. Hinge as claimed in any of the preceding claims, wherein the sensor means (41) comprise a mechanical sensor.

8. Hinge as claimed in claim 7, wherein the mechanical sensor is configured to change its structure upon wear of the bushing (23).

9. Hinge as claimed in any of the preceding claims, wherein the sensor means (41) comprise an electrical sensor (61) configured to detect wear of the bushing (23) and produce a wear signal indicative thereof.

10. Hinge as claimed in claim 9, wherein the electrical sensor (61) is configured to transmit the wear signal upon contact with the pin (21).

11. Hinge as claimed in claim 10, wherein the electrical sensor (61) is switchable between a first configuration, wherein the electrical sensor (61) is not in contact with the pin (21), and a second configuration, wherein the electrical sensor (61) is in contact with the pin (21), the wear signal being indicative of the configuration of the electrical sensor (61) .

12. Work vehicle comprising a hinge (11) as claimed in any of the preceding claims.

13. Work vehicle comprising an electronic control unit (71) and a hinge (11) as claimed in any of claims 9 to 11, wherein the electronic control unit (71) is configured to receive the wear signal from the electrical sensor (61) and to transmit a warning signal on the basis of the wear signal.

14. Work vehicle as claimed in claim 13, wherein the electronic control unit (71) is configured to transmit the warning signal to an electronic device (81) communicatively coupled to the electronic control unit (71).

15. Work vehicle as claimed in claim 13 or 14, comprising a display device (82) communicatively coupled to the electronic control unit (71), the display device (82) being configured to receive the warning signal and to display visual information on the basis of the warning signal.

16. Work vehicle as claimed in any of claims 13 to 15, comprising a plurality of said hinges (11), wherein the electronic control unit (71) is configured to receive a plurality of wear signals from the respective electrical sensors (61), each wear signal being associated with the respective hinge (11), and to transmit a plurality of warning signals to at least one electronic device (81), each warning signal being associated with the respective wear signal.

17. Method for warning of wear in a work vehicle (1) as claimed in any of claims 13 to 16, comprising the steps of:
- receiving, by the electronic control unit (71), a wear signal from the electrical sensor (61), the wear signal being associated with a respective hinge (11); and
- transmitting, by the electronic control unit (71), a warning signal on the basis of the wear signal.
